# EUROPÄISCHE PATENTANMELDUNG

(11) **EP 1 638 025 A2**
(43) Veröffentlichungstag der Anmeldung: **22.03.2006**
(21) Anmeldenummer: 05108647.8
(22) Anmeldetag: 20.09.2005
(51) Int. Cl.: G06F 17/30

(54) **Verfahren und Vorrichtung zur Erweiterung der Verwaltung von Web-Services**

(30) Priorität: 20.09.2004 DE 102004045478
(71) Anmelder: SIEMENS AKTIENGESELLSCHAFT, 80333 München (DE)
(72) Erfinder: Azeez-Distler, Olajide, 81547 München (DE); Herwig, Volker, 99094 Erfurt (DE); Sedlmeier, Thomas, 85051 Ingolstadt (DE)
(74) Vertreter: Berg, Peter

(57) **Zusammenfassung**

Die Erfindung betrifft ein Verfahren und eine Vorrichtung zur Erweiterung der Verwaltung von Web-Services, wobei jeder WebService in einem Verzeichnis (UDDI) registriert ist. Durch das erfindungsgemäße Verfahren wird jedem eingetragenen WebService eine Liste von potentiell zugreifenden Anwendungen (AW) zugeordnet (1) und bei einer Änderung eines registrierten Dienstes anhand dieser Liste von potentiell zugreifenden Anwendungen (AW) an die Adressen dieser Anwendungen (AW) ein Änderungshinweis gesandt (7).

Das erfindungsgemäße Verfahren und die erfindungsgemäße Vorrichtung bietet den Vorteil, dass durch die Liste von potentiell zugreifenden Anwendungen (AW), die jedem Webservice zugeordnet ist (1), im Verzeichnis (UDDI) bekannt ist, welche Anwendungen (AW) bzw. Nutzer bei Änderungen oder beim Löschen eines Web-Services zu informieren sind (7).

## Beschreibung

Die Erfindung betrifft ein Verfahren zur Erweiterung der Verwaltung von Web-Services, wobei jedes Web-Service in einem Verzeichnis registriert ist.
Weiterhin betrifft die Erfindung eine Vorrichtung, die zur Durchführung des Verfahrens zur Erweiterung der Verwaltung von Web-Services eingerichtet ist.

Der Begriff "Web" steht als Kurzform für World Wide Web, das auch als WWW bezeichnet wird. Das Web ist eine leicht zu bedienende Anwendung im Internet, wobei das Internet durch die Verwendung des Internetprotokolls und dessen Adressierung definiert ist und eine Gesamtheit von Netzen darstellt, die Dienste wie E-Mail, FTP oder eben das WWW zur Verfügung stellen.

Das WWW oder Web ist eine Anwendung im Internet, durch die der Zugriff auf entfernte Datenbanken, auch Web-Server genannt, mittels sogenannter Hyperlinks ermöglicht wird, ohne an eine bestimmte genormte Dateistruktur gebunden zu sein. Die Basis für das WWW ist das sogenannte HyperText Transfer Protocol oder http, das im WWW für die Anforderung von Daten vom Web-Server eingesetzt wird, und die HyperText Markup Language oder HTML, die als Seitenbeschreibungssprache vom WWW genutzt wird.

Mit dem WWW können verschiedene Inhalte über die sogenannten Hyperlinks, die als Verbindungen zwischen den einzeln Inhalten, die auch auf voneinander entfernten Datenspeichern abgelegt sein können, dienen, angewählt werden. Diese Inhalte werden dann in einem sogenannten Browser angezeigt, der mittels grafischer Nutzeroberfläche zum einfachen und benutzerfreundlichen Navigieren zwischen den Dateninhalten dient, die von den Anbietern auf Web-Servern den Nutzern zur Verfügung gestellt werden.

Neben den Text-, Bild-, Audio- und Videoinhalten können Anbieter über das WWW Benutzern zusätzliche Anwendungen, sogenannte Web-Services wie beispielsweise Online-Hilfe, Online-Telefonbuch, Online-Übersetzungsprogramme, Online-Kataloge oder Bestellservices im WWW, etc., zur Verfügung stellen.

Web-Services sind Anwendungen, die den Internetstandard verwenden und beispielsweise auf HTML oder Java basieren, wobei Java eine universelle, objektorientierte Programmierumgebung ist, mit deren Hilfe Anwendungen entwickelt werden können, in die dynamische, sich laufend aktualisierende Elemente eingebunden sind. Web-Services können durch Eingabe einer Adresse, einem sogenannten Universal Resource Locator oder URL, in den Browser im WWW angewählt werden und stellen dem Benutzer dann programmatisch Informationen zur Verfügung.

Um diese Web-Services Benutzern zur Verfügung zu stellen, ist aus dem Stand der Technik das Verfahren der Registrierung dieser Web-Services in einem Verzeichnis, dem sogenannten Universal Description, Discovery and Integration Repository oder kurz UDDI, bekannt.

Für das UDDI wurde von der Organization for the Advancement of Structured Information Standards oder kurz OASIS ein Standard erarbeitet, dessen derzeit aktuelle Version die Version 3 ist und der die Funktionalitäten des UDDIs beschreibt. Auf Basis dieses Standards bieten eine große Zahl von Software-Herstellern UDDI-Produkte, die eingesetzt werden können, um Web-Services Benutzern wie beispielsweise WWW-Nutzer oder innerhalb von Unternehmen Mitarbeitern und Geschäftspartner zugänglich zu machen.

Neben der Funktion des UDDI, die Web-Services zu registrieren, beschreibt der Standard für das UDDI auch Nutzungsprozesse für die Verwaltung, Änderung und das Löschen von Web-Services durch den Anbieter. Zusätzlich können Benutzer im UDDI-Verzeichnis nach Web-Services suchen. Wenn sie ein Web-Service mit der gewünschten Funktionalität gefunden haben, kann dieses Web-Service dann vom Benutzer in seine Anwendung eingebunden werden. Wird ein Web-Service vom Anbieter geändert, so werden diese Änderungen im UDDI eingetragen und die bisherige Beschreibung des Web-Service direkt überschrieben. Die Änderungen sind dann sofort für alle Benutzer dieses Web-Service sichtbar und können von den Anwendungen, in denen dieses Web-Service eingebunden ist, sofort genutzt werden. Ein Anbieter kann aber einen Web-Service auch im UDDI löschen. Dann steht dieser Service dem Benutzer nicht mehr zur Verfügung.

UDDI-Produkte werden aber auch für das Registrieren und Verwalten von Web-Services innerhalb von Unternehmen eingesetzt, die beispielsweise unternehmensintern oder von Geschäftpartner in Anwendungen für interne Geschäftsprozesse oder Geschäftsprozesse zwischen Unternehmen verwendet werden. Daher ist es wichtig, dass vor allem in diesen Fällen die Nutzer über Änderungen oder das Löschen von Web-Services, die in Anwendungen für die Abwicklung von Geschäftsprozessen eingebunden sind, Bescheid wissen.

Die aus dem Stand der Technik für UDDI bekannten Verfahren und Vorrichtungen sehen allerdings nicht vor, dass Nutzer eines Web-Service über dessen Änderungen oder das Löschen dieses Web-Service informiert werden. Die Nutzer bzw. Anwendungen, die bestimmte Web-Services nutzen, sind nach dem Standard der OASIS im UDDI und damit auch für den Web-Service-Anbieter vollständig anonym.

Der Erfindung liegt daher die Aufgabe zugrunde, ein Verfahren und eine Vorrichtung anzugeben, durch die jene Anwendungen bekannt sind, die auf ein bestimmtes Web-Service zugreifen und damit eine Information der Benutzer über Änderungen dieses Web-Service ermöglicht wird.

Erfindungsgemäß geschieht dies mit einem Verfahren und einer Vorrichtung zur Erweiterung der Verwaltung von Web-Services der eingangs erwähnten Art, wobei beim erfindungsgemäßen Verfahren jedem eingetragenen Web-Service eine Liste von potentiell zugreifenden Anwendungen zugeordnet wird und wobei bei einer Änderung eines registrierten Web-Service anhand dieser Liste von potentiell zugreifenden Anwendungen an die Adresse dieser Anwendungen ein Änderungshinweis gesandt wird.

Das erfindungsgemäße Verfahren hat den Vorteil, dass durch die Liste von potentiell zugreifenden Anwendungen, die jedem Webservice zugeordnet ist, im Verzeichnis bzw. im UDDI bekannt ist, welche Anwendungen bzw. Nutzer bei Änderungen oder beim Löschen eines Web-Services zu informieren sind. Der Web-Service-Anbieter kann daher Änderungshinweise oder eine Information, dass ein Web-Service gelöscht wird, an alle Nutzer diese Web-Service senden. Den Nutzer ist dann bekannt, dass seine Anwendung nun im Fall einer Änderung auf eine neue Version des Web-Services zugreift bzw. im Fall, dass der Web-Service gelöscht wird, auf diesen nicht mehr zugreifen kann.

Günstig ist dabei, wenn der Änderungshinweis eine Aufforderung zur Aktualisierung oder zum Löschen des Web-Services umfasst, die von der potentiell zugreifenden Anwendung bestätigt oder abgelehnt werden kann. Es besteht dadurch die Möglichkeit, das Ändern oder Löschen eines Web-Services durch Ablehnen des Änderungs- bzw. Löschwunsches zu verhindern, wenn dieses von der Anwendung in der aktuellen Version noch weiterhin genötigt wird. Der Web-Service kann dann weiter unverändert benutzt werden.

Einen Vorteil stellt auch dar, wenn bei einer Änderung eines Web-Service eine alte und eine neue Version der potentiell zugreifenden Anwendung zur Verfügung gestellt werden. Oft ist es notwendig, dass für eine neue Version eines Web-Services auch die zugreifende Anwendung angepasst werden muss. Durch das Parallelangebot von alter und neuer Version des Web-Service kann die zugreifende Anwendung geändert werden, ohne dass der Ablauf der auf der Anwendung und dem Web-Service basierenden Geschäftsprozesse gestört werden, da hier jeweils noch die alten Versionen verwendet werden können.

Günstig ist es auch, wenn für die Änderung eines Web-Services ein Zieltermin angegeben wird, ab dem nur mehr die geänderte, neu Variante des Web-Services den zugreifenden Anwendungen zur Verfügung steht. So ist bekannt, wann beispielsweise eine Anpassung der zugreifenden Anwendung bereitgestellt werden muss, falls für die neue Version des Web-Services auch bei der zugreifenden Anwendung Änderungen vorgenommen werden müssen.

Vorteilhaft ist es auch, wenn für das Löschen eines Web-Services ein Zieltermin angegeben wird, ab dem der Web-Service nicht mehr für zugreifende Anwendungen zur Verfügung steht. So ist für Nutzer der zugreifenden Anwendung bekannt, dass sie ab diesem Zeitpunkt nicht mehr mit der Anwendung auf dieses Web-Service zugreifen können.

Die Aufgabe der Erfindung wird auch mit einer Vorrichtung der eingangs genannten Art gelöst, die Mittel zur Speicherung von Daten des Verzeichnisses und der Liste von potentiell zugreifenden Anwendungen, Mittel zur Registrierung der Web-Services und zur Zuordnung der Liste von potentiell zugreifenden Anwendungen zu den Web-Services, Mittel für den Zugriff der potentiell zugreifenden Anwendungen und Mittel für die Eingabe, Verwaltung und den Versand von Änderungshinweisen an die Adressen von potentiell zugreifenden Anwendungen umfasst.
Die erfindungsgemäße Vorrichtung hat den Vorteil, dass sie nicht nur Mittel umfasst, die die Daten des Verzeichnisses und der Liste von potentiell zugreifenden Anwendungen speichern, die Web-Services registrieren, die Liste potentiell zugreifenden Anwendungen den Web-Services zuordnen und den Zugriff dieser Anwendungen unterstützen, sondern auch Mittel eingerichtet sind, die die Eingabe und Verwaltung der Web-Services durch den Anbieter unterstützen und den Versand von Änderungshinweisen an die Adresse potentiell zugreifenden Anwendungen ermöglichen.

Günstig ist es auch, wenn die Mittel für die Eingabe, Verwaltung und den Versand von Änderungshinweisen an die Adresse von potentiell zugreifenden Anwendungen und die Mittel zur Registrierung der Web-Services und zur Zuordnung der Liste von potentiell zugreifenden Anwendungen zu den Web-Services auf einer einzelnen Rechnerplattform implementiert sind. Es werden so Hardware- und Softwarestrukturen wie beispielsweise die Mittel zur Daten des Verzeichnisses auch von den Mitteln zur Zuordnung der Liste von potentiell zugreifenden Anwendungen zu den Web-Services und von den Mitteln für die Eingabe, Verwaltung und den Versand von Änderungshinweisen auf einfache Weise gemeinsam benutzt. Eine neue Rechnerplattform ist dann dafür nicht notwendig.

Vorteilhaft ist es außerdem, wenn für die als Rechnerplattform für die Mittel für die Eingabe, Verwaltung und den Versand von Änderungshinweisen an die Adresse von potentiell zugreifenden Anwendungen und die Mittel zur Registrierung der Web-Services und zur Zuordnung der Liste von potentiell zugreifenden Anwendungen eine Java-Plattform vorgesehen ist. Web-Services basieren häufig auf Java und liegen daher auf einer Java-Plattform. Auch die Anwendungen zur Eingabe, Verwaltung und zum Versand von Änderungshinweisen durch den Dienstanbieter können auf einfache Weise als Java-basierte Web-Services ausgestaltet werden, wenn eine Java-Plattform eingesetzt wird. So kann auf sie über das WWW und eine Browser zugegriffen werden.

Die Erfindung wird anhand einer Figur näher erläutert. Es zeigen beispielhaft:

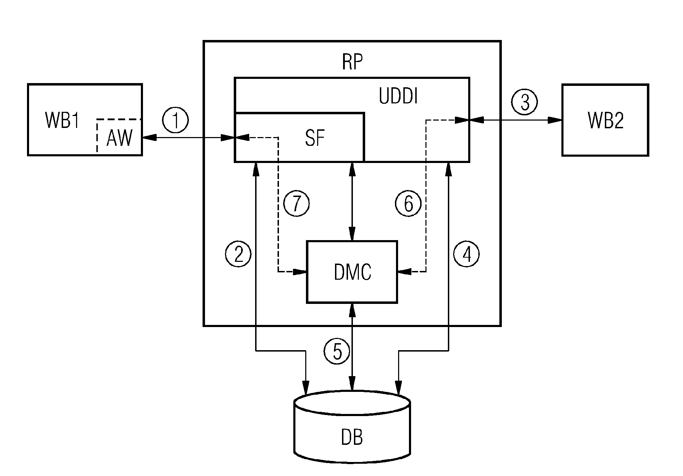

- Fig.1: den funktionellen Aufbau einer Vorrichtung, in dem das erfindungsgemäße Verfahren angewendet wird

Figur 1 zeigt eine Rechnerplattform RP, die idealerweise als Java-Plattform ausgeführt ist und einen Web-Server inkludiert, der für die Anbindung über HTTP des benutzerseitigen Webbrowsers WB1, in dem auch die zugreifenden Anwendung AW abläuft, und des Webbrowsers WB2 für die Administration der Web-Services beim Dienstanbieter eingesetzt wird. Die Rechnerplattform umfasst ein Verzeichnis UDDI, in dem die Web-Services registriert werden und eine Komponente DMC, die der Eingabe, der Verwaltung und dem Versand von Änderungshinweisen an die Adresse von potentiell auf die Web-Services zugreifenden Anwendungen AW dient. Sowohl das Verzeichnis UDDI als auch die Komponente DMC sind mit einer Datenbank DB verbunden, in der die Daten der Web-Services sowie die Daten der auf die Web-Services zugreifenden Anwendungen AW hinterlegt sind. Das Verzeichnis UDDI ist außerdem um eine funktionale Einheit SF erweitert, die der Zuordnung der Liste von potentiell zugreifenden Anwendungen AW zu einem Web-Service dient.

Ein Nutzer kann nun über seinen Webbrowser WB1 im Verzeichnis UDDI ein Web-Service suchen. Entspricht das Web-Service den Anforderungen einer Anwendung AW des Nutzers, so kann dieses Web-Service mit Hilfe der funktionalen Einheit SF des Verzeichnisses UDDI in einem Verfahrenschritt 1 subskribiert werden. Das bedeutet dem Web-Service werden in einer Liste Daten der Anwendung AW des Benutzers wie beispielsweise die Adresse der Anwendung AW zugeordnet. Diese Daten werden nach dem Subskriptionsschritt 1 in einem Schritt 2 in der Datenbank DB hinterlegt, wodurch die auf das Web-Service zugreifende Anwendung AW dem Verzeichnis UDDI bekannt ist.

Soll nun ein im Verzeichnis UDDI eingetragenes Web-Service geändert oder gelöscht werden, wird in einem Schritt 3 über den Webbrowser WB2, der vom Anbieter oder Administrator des Web-Services benutzt wird, eine Verbindung zum Verzeichnis UDDI hergestellt, um die Daten des zu ändernden bzw. löschenden Web-Service zu ermitteln. Diese Daten werden in einem Schritt 4 aus der Datenbank DB geholt und dem Anbieter über den Webbrowser WB2 zur Verfügung gestellt. In einem nächsten Verfahrensschritt 5 wird mit Hilfe der Komponente DMC die dem Web-Service zugeordnete Liste, die die Adressdaten der potentiell zugreifenden Anwendungen AW enthält, aus der Datenbank DB geholt und dem Anbieter zur Verfügung gestellt. In einem weiteren Schritt 6 kann nun ein Hinweis über die Änderung bzw. das Löschen des Web-Service vom Anbieter über den Webbrowser WB2 eingegeben werden. Dieser Hinweise wird dann mit Hilfe der Komponente DMC in einem Schritt 7 an alle in der dem Web-Service zugeordneten Liste hinterlegten Adressen von potentiell zugreifenden Anwendungen AW versandt. Die auf diesen Web-Service zugreifende Anwendung AW erhält somit einen Hinweis über die bevorstehende Änderung oder das bevorstehende Löschen des Web-Service. Dieser Hinweis wird dem Nutzer der Anwendung AW und des Web-Service auf seinem Webbrowser WB1 angezeigt.

In einem Sonderfall kann dieser Hinweis eine Aufforderung zur Änderung bzw. zum Löschens des Web-Services beinhalten, die von der Anwendung AW bzw. von ihrem Nutzer im Webbrowser WB1 bestätigt oder abgelehnt werden kann. Die Antwort auf diese Aufforderung wird über die Rechnerplattform RP und mit Hilfe der Komponente DMC an den Web-Service-Anbieter gesandt und von ihm ausgewertet.

Zusätzlich werden von der Komponente DMC Verwaltungsschritte für Web-Services unterstützt, die vom Web-Service-Anbieter durchführt werden. Es kann zu einem Web-Service für eine bestimmte Zeit eine alte und eine aktualisierte Version im Verzeichnis UDDI eingetragen werden. Die aktualisierte Version des Web-Services wird vom Anbieter über den Webbrowser WB2 auf die Rechnerplattform RP gestellt, im Verzeichnis UDDI registriert und ihre Daten mit Hilfe der Komponente DMC in der Datenbank DB hinterlegt. Über den Webbrowser WB2 wird zusätzlich ein Zieltermin mit Hilfe der Komponente DMC in Datenbank DB eingetragen, zu dem die alte Version des Web-Service gelöscht werden soll. In einem weiteren Schritt wird vom Anbieter wieder ein Hinweis an alle in der dem Web-Service zugeordneten Liste hinterlegten Adressen von potentiell zugreifenden Anwendungen AW mit Hilfe der Komponente DMC versandt, dass für eine bestimmte Zeitspanne eine alte und eine neue Version des Web-Service zur Verfügung stehen. Von der auf das Web-Service zugreifenden Anwendung AW kann nun während dieser Zeit wahlweise auf die neue oder noch auf die alte Version des Web-Service zugegriffen werden.

## Patentansprüche

1. Verfahren zur Erweiterung der Verwaltung von Web-Services, wobei jedes Web-Service in einem Verzeichnis (UDDI) registriert ist, **dadurch gekennzeichnet, dass** jedem eingetragenen Web-Service eine Liste von potentiell zugreifenden Anwendungen (AW) zugeordnet wird (1) und dass bei einer Änderung eines registrierten Dienstes anhand dieser Liste von potentiell zugreifenden Anwendungen (AW) an die Adressen dieser Anwendungen (AW) ein Änderungshinweis gesandt wird (7).

2. Verfahren nach Anspruch 1 **dadurch gekennzeichnet, dass** der Änderungshinweis eine Aufforderung zur Aktualisierung oder zum Löschen der Web-Services umfasst, die von der potentiell zugreifenden Anwendung (AW) bestätigt oder abgelehnt wird.

3. Verfahren nach einem der Ansprüche 1 bis 2 **dadurch gekennzeichnet, dass** bei Änderungen des Web-Service eine alte und neue Version des Web-Service der potentiell zugreifenden Anwendung (AW) zur Verfügung gestellt wird.

4. Verfahren nach einem der Ansprüche 1 bis 3 **dadurch gekennzeichnet, dass** beim Ändern des Web-Service eine Angabe eines Zieltermins für die Änderung vorgegeben wird.

5. Verfahren nach einem der Ansprüche 1 bis 4 **dadurch gekennzeichnet, dass** beim Löschen des Web-Service eine Angabe eines Zieltermins für das Löschen vorgegeben wird.

6. Vorrichtung, die zur Durchführung eines Verfahrens nach den Ansprüchen 1 bis 5 eingerichtet ist, **dadurch gekennzeichnet, dass**
- Mittel zur Speicherung von Daten (DB) des Verzeichnisses (UDDI) und der Liste von potentiell zugreifenden Anwendungen (AW),
- Mittel zur Registrierung der Web-Services (UDDI)und zur Zuordnung (SF) der Liste von potentiell zugreifenden Anwendungen (AW) zu den Web-Services,
- Mittel für den Zugriff (WB1) der potentiell zugreifenden Anwendungen (AW) und
- Mittel für die Eingabe, Verwaltung und den Versand von Änderungshinweisen (DMC) an die Adressen von potentiell zugreifenden Anwendungen (AW) vorgesehen sind.

7. Vorrichtung nach Anspruch 6 **dadurch gekennzeichnet, dass** die Mittel für die Eingabe, Verwaltung und den Versand von Änderungshinweisen (DMC)an die Adresse von potentiell zugreifenden Anwendungen (AW) und die Mittel zur Registrierung der Web-Services (UDDI) und zur Zuordnung (SF) der Liste von potentiell zugreifenden Anwendungen (AW) zu den Web-Services auf einer einzelnen Rechnerplattform (RP) implementiert sind.

8. Vorrichtung nach einem der Ansprüche 6 bis 7 **dadurch gekennzeichnet, dass** für die als Rechnerplattform (RP) für die Mittel für die Eingabe, Verwaltung und den Versand von Änderungshinweisen (DMC) an die Adresse von potentiell zugreifenden Anwendungen (AW) und die Mittel zur Registrierung der Web-Services (UDDI) und zur Zuordnung (SF) der Liste von potentiell zugreifenden Anwendungen (AW) eine Java-Plattform vorgesehen ist.
